# EUROPEAN PATENT SPECIFICATION

(11) **EP 2 926 601 B1**
(45) Date of publication and mention of the grant of the patent: **01.11.2017**
(21) Application number: 13859291.0
(22) Date of filing: 31.07.2013
(51) Int. Cl.: H04W 52/02, H04W 76/04

(54) **DISCONTINUOUS RECEPTION IN A MOBILE RADIO COMMUNICATION DEVICE**
DISKONTINUIERLICHER EMPFANG IN EINEM MOBILEN FUNKKOMMUNIKATIONSNETZWERK
RÉCEPTION DISCONTINUE DANS UN DISPOSITIF DE RADIOCOMMUNICATION MOBILE

(30) Priority: 27.11.2012 GB 201221325
(43) Date of publication of application: 07.10.2015
(73) Proprietor: NEC Corporation, Tokyo 108-8001 (JP)
(72) Inventor: HANEJI, Hayato, Reading Berkshire RG2 0TD (GB); IANEV, Iskren, Reading Berkshire RG2 0TD (GB); HENNELLY, Martin, Reading Berkshire RG2 0TD (GB); LAIR, Yannick, Reading Berkshire RG2 0TD (GB)
(74) Representative: MacDougall, Alan John Shaw
(86) International application number: PCT/JP2013/004647
(87) International publication number: WO 2014/083723

(56) References cited:
- WO-A1-2011/056252
- WO-A1-2011/162039
- JP-A- H11 177 564
- US-A1- 2009 310 503
- US-A1- 2012 120 815
- US-A1- 2012 252 517
- US-A1- 2013 084 845

## Description

### Technical Field

The invention relates to Discontinuous Reception (DRX) in a mobile radio communication device and in particular, but not exclusively, to a Machine Type Communications (MTC) device.

### Background Art

Discontinuous Reception is a well established method used in wireless communication systems to reduce power consumption. A mobile radio communication device such as User Equipment (UE) exhibits DRX by switching off its receiver for certain periods during the monitoring the incoming signals, such as paging signals, from the network. DRX is standardized and implemented in 2G/3G/LTE developments of the 3^{rd} Generation Partnership Project (3GPP) communication systems.

DRX employs repeating on/off cycles commonly monitoring for paging signals from the network and according to current 3GPP specifications, a range of DRX cycles, and monitoring for only one Paging group per one DRX cycle for 2G systems, one Paging Indicator per one DRX cycle for 3G systems, and, one Paging Occasion per one DRX cycle for LTE systems.

The DRX cycle and the paging position, i.e. the frame, or sub-frame, to which the paging signal is assigned, are calculated by paging related parameters in System Information (SI) message(s), and by UE identifiers such as the International Mobile Subscribers Identity (IMSI) or the Globally Unique Temporary ID (GUTI). These are for example defined in 3GPP Technical Specification TS23.003. Further, these values can be changed according to a preferred DRX cycle and paging position by means of the DRX parameter Information Element (IE) found for example in Attach/RAU/TAU update request messages according to 3GPP Technical Specification TS24.008 s 10.5.5.6. This IE has a length of 3 octets and includes a Core Network (CN) - specific DRX cycle length coefficient and a DRX value for S1 mode.

It is of course appreciated that the longer the DRX cycle, the greater the potential power consumption saving. However, in practice the defined maximum DRX cycle in the current 3GPP specifications is relatively short period. In 3GPP working group discussions relating to Machine Type Communication (MTC) therefore devices have been proposed that employ longer, i.e. extended, DRX cycles.

A proposal relating to extended paging cycles was approved at GPP TSG SA WG2 Meeting #93 wherein an extended DRX cycle is arranged to perform the following two alternative DRX schemes. First, the paging monitoring is executed less frequently by extending the DRX cycle. This is suited in particular to devices that require less time critical communication. In the alternative, a scheme serving to mix one or more periods of normal DRX cycles and extended DRX cycles can be provided.

It is also known from PTL1 to extend the above proposal to use the same duration and timing of the extended DRX cycle by a plurality of MTC devices belong in the same MTC group.

WO 2011056252 discloses a method and apparatus for a multimode terminal (MMT) in idle mode operation in CDMA 1xRTT and frame asynchronous TD-SCDMA networks techniques for scheduling paging intervals in the multimode terminal to reduce paging interval conflicts. The method includes determining a circuit-switched (CS) discontinuous reception (DRX) cycle length of a first network), determining a paging cycle length of a second network, setting a packet-switched (PS) DRX cycle length" based on the paging cycle length and the CS DRX cycle length to avoid overlap between a paging interval of the first network and a paging interval of the second network, and communicating the PS DRX cycle length to the first network.

US 2012252517 discloses methods and apparatus for triggering and synchronizing a machine type communication (MTC) device. MTC devices may operate in a time controlled mode, where the MTC device attaches to a network at specified intervals to report to a network. The time controlled mode may include two time controlled cycles, a reporting cycle and a control cycle. Methods are also described for communicating the reporting and control cycles between the MTC device and the network or MTC server. These cycles may be communicated on an application layer, by an MTC server using an MTCsp interface or via MTC configuration. In addition, triggering cycles may be sent via the Non-Access-Stratum (NAS) layer by extending discontinuous reception (DRX) cycles or by allowing a network to send the cycles over a broadcast channel by defining new system information block (SIB) information.

US 2012120815 discloses that a wireless network, such as a Long-Term Evolution, LTE, network, may be configured to monitor a communications interface to set an inactivity timer that, in turn, sets the operating mode of a communications interface. The operating mode may comprise a time-domain reception pattern of the wireless device. A wireless device may monitor a communications interface that includes at least a first logical channel (for example for a first application) and a second logical channel (for example for a second application). Based on monitoring the communications interface, a first activity state for the first logical channel may be determined. Also, based on monitoring the communications interface, a second activity state (e.g., an activity status) for the second logical channel may be determined. An inactivity timer used by the communications interface may be set to a first value or a second value based on the first and second activity states. The battery life of a wireless device may be adapted by setting an inactivity timer responsive to the manner in which the wireless device is being used.

US 2009310503 discloses systems and methodologies that facilitate managing interaction between paging and discontinuous reception (DRX) cycles for users operating in a communication system. A connected mode user having an associated DRX cycle can modify its schedule for paging reception. For example, a user can initially schedule monitoring of paging occasions that coincide with periods of activity associated with the DRX cycle of the user. If such paging occasions are not sufficient to reach a minimum required number of monitored paging occasions, additional paging occasions can be monitored as needed by scheduling additional periods of activity and/or extending periods of activity specified in the DRX cycle. A network can synchronize a connected mode DRX cycle associated with a user with an idle mode paging cycle for the user.

WO 2011162039 discloses that a terminal performs intermittent operations, while receiving, from a base station, paging information and other necessary information. An example is in hierarchically combining the periods of a plurality of DRXs, the lengths of which are different from each another, thereby determining sections where intermittent operations are performed. The DRX of any hierarchically upper order has a longer period than the DRX of any hierarchically lower order. Based on information related to the period of the DRX of an upper order, the section where the period of the DRX of an immediately lower order is used is determined. In the section where information related to the period of the DRX of the lowest order is used, the intermittent operation of a communication processing unit is controlled based on the information related to the period of that DRX.

### Citation List

### Patent Literature

PTL 1: International Patent Publication No. GB 2 483 752

### Summary of Invention

### Technical Problem

Known DRX methods and systems still however exhibit limitations and disadvantages which can become more pronounced with different types of mobile devices.

Such known schemes are particularly limited when considering MTC devices that can operate according to a variety of MTC applications, associated with various MTC application servers, which can exhibit different characteristics according to the requirements of the MTC systems in which they are employed.

MTC applications are not always time-tolerant and so the use of a simple, regular, but relatively long DRX cycle such as 1 hour, 1 day etc. can cause communication problems between the MTC application and the MTC application server due to the MTC device not successfully receiving the paging signalling.

In a scenario employing DRX, the network sends the paging message only at the appropriate paging occasion and at which time the UE switches on the receiver to receive the paging messages. In scenarios employing extended DRX, when the paging occurs during an extended DRX cycle where the UE has switched-off its receiver, the network might reject, or postpone, the sending of the paging until the UE switches on its receiver for paging because the UE cannot receive the paging during the extended DRX cycle.

Also, and particularly for MTC systems, one or more MTC applications associated with one or more MTC application servers, can be installed into a single MTC device. In such cases, when plurality of MTC application servers send access requests to the network during the extended DRX cycle, the network is likely to reject, or postpone, the sending of paging signals until the end of the Extended DRX time period.

As a result, when the MTC device can next receive the paging signals, the multiple paging signals are likely to converge to occur at the same timing due to the postponed pagings, or the re-sending of the access request signals from the MTC application servers. Therefore some paging signals are likely to be missed by the MTC device because it cannot handle multiple pagings simultaneously.

The invention seeks to provide for a mobile radio communications device, and related system, method and network device, exhibiting DRX, and having advantages over known such devices, methods and systems.

### Solution to Problem

According to one aspect of the present invention there is provided a mobile radio communications device arranged to define a plurality of schedules of planned DRX activity, arranged to merge the plurality of schedules to form a single merged schedule of planned DRX activity, arranged to operate a DRX power saving procedure, the DRX procedure being defined by the single merged schedule of planned DRX activity, arranged to transmit the single merged schedule of planned DRX activity to a network device, and arranged to receive the signalling from a network device sent according to the single merged schedule of planned DRX activity.

The employment of scheduling in accordance with the present invention provides for an advantageous mechanism to enhance power saving while also serving to reduce the likelihood of network signalling, such as paging messages, being missed.

In one example, the device can include means for transmitting the said schedule to the network device so as to provide for an effective means of sharing the schedule across the network, or alternatively or in addition, includes means for receiving the said schedule from the network.

Further, the device can include a scheduler for storing the schedule and which can be arranged to communicate with a protocol stack within the device. If required, a plurality of schedules of planned DRX activity can be provided along with means for merging the plurality of schedules to form a single merged schedule of planned DRX activity.

Advantageously, the DRX cycling can be based on known cycling but adapted control signals serving to start/stop the DRX cycling as required to provide for the scheduled activity. A device as claimed in any one or more of the preceding claims wherein the schedule of planned DRX activity is defined by DRX start and stop requests for DRX cycling.

Further, the above device can include a plurality of MTC applications each related to a respective schedule of planned DRX activity.

According to another aspect of the present invention there is provided a mobile radio communications network device arranged for signalling to a mobile radio communications device operating a DRX power saving procedure, wherein the mobile radio communications network device arranged to receive a plurality of schedules of planned DRX activity within the mobile radio communications device from the mobile radio communications device, the plurality of schedules being provided within a single merged schedule of planned DRX activity, and arranged to control the said signalling according to the single merged schedule of planned DRX activity.

In one advantageous aspect, the network device is arranged to receive the schedule from the said mobile radio communications device, or alternatively or in addition, transmit the schedule to the mobile radio communications device.

Yet further, the network device can be arranged to control the said signalling according to a plurality of schedules relating to a plurality of signalling messages, and as such plurality of schedules can be provided within a single merged schedule.

If required, the network device can be arranged to act on requests from a further network device for signalling to the mobile communications device, according to the said schedule of planned DRX activity. In this manner, the network device can be arranged to store the said schedule for future reference as and when said requests are received.

In particular, the device can be arranged to receive access requests from at least one MTC server, or indeed the said device can itself comprise an MTC server.

Of course, it will be appreciated that the present invention can provide for a mobile radio communications system including a mobile radio communications device and a mobile radio communications network device such as those outlined above.

According to a further aspect of the present invention there is provided a method of operating a mobile radio communications device within a wireless communications network according to a power saving DRX procedure, including defining a plurality of schedules of planned DRX activity for the device, merging the plurality of schedules into a single merged schedule of planned DRX activity, transmitting the single merged schedule of planned DRX activity from the mobile radio communications device to the network, and receiving network signalling sent to the mobile radio communications device according to the single merged schedule of planned DRX activity.

The method can include the step of transmitting the schedule from the mobile radio communications device to the network, and/or receiving it from the network, which schedule can, if required, comprise a single schedule formed of a plurality of merged schedules.

According to yet a further example, there is provided method of operating a mobile radio communications network device to provide network signalling to a mobile radio communications device operating a power saving DRX procedure, and including the step of controlling the said signalling according to a schedule of planned DRX activity in the mobile radio communications device.

The method can further include the step of receiving the schedule from the mobile radio communications device and/or transmitting it to the mobile radio communications device, and storing the said schedule within the mobile radio communications network device.

The method can then also include the step of acting on requests from a further network device for signalling to the mobile radio communications device, according to the said schedule of planned DRX activity.

Of course, it will be appreciated that the invention also provides for a method of operating a mobile radio syndication system including a method of operating a mobile radio communications device, and of operating a mobile radio communications network device as outlined above.

While it will be appreciated that the primary aspect of the invention, i.e. the use of a merged schedule of planned DRX activity can be employed without any implementation in the Core Network (CN), it can be arranged that the CN can receive the notification of the merged schedule of planned DRX from the UE as the optional function but of course only when the CN supports this feature. In this manner, the notified schedule can then be used by the CN to prevent so-called "vain paging" occurring.

Yet further, and of course with the core network being arranged to support the present invention, the schedule of planned DRX activity for the mobile radio communications device, e.g. UE, can be formed within the CN and delivered in NAS messaging from, for example, the Serving GPRS Support Node/Mobile Management Entity (SGSN/MME) to the UE. Servers can then be notified by the UE of the (CN-originating) schedule of planned DRX activity by way of uplink signalling from the UE, such that the servers will subsequently transmit their respective access requests to the SGSN/MME, for onward delivery of paging signalling to the UE in a scheduled manner to coincide with periods when the UE's receiver is on and the paging can be received.

### Advantageous Effects of Invention

The invention is advantageous in providing an improved DRX mechanism to achieve lower power consumption without missing a paging.

### Brief Description of Drawings

The invention is described further hereinafter, by way of example only, with reference to the accompanying drawings in which:
[Fig. 1] Fig. 1 is a timing diagram relating an extended DRX in a known MTC communications system.
[Fig. 2] Fig. 2 is a schematic diagram of an MTC device according to an embodiment of the present invention.
[Fig. 3] Fig. 3 is a timing diagram relating to DRX in a MTC communication system according to an embodiment of the present invention;
[Fig. 4] Fig. 4 is a schematic diagram of an MTC device according to another embodiment of the present invention;
[Fig. 5] Fig. 5 is a timing diagram relating to DRX in a MTC communication system according to another embodiment of the invention; and
[Fig. 6] Fig. 6 is a timing diagram of a DRX procedure according to an embodiment of the invention.

### Description of Embodiments

As will be appreciated, the invention proposes the use of a scheduled DRX scheme and communications and network devices arranged to operate according to such a scheme. The DRX schedule offers a planned DRX procedure of activity only at specific times defined according to the schedule.

Although the illustrated embodiments of the invention are shown in the context of a MTC system, it should be appreciated that the invention is equally applicable to any wireless communications system.

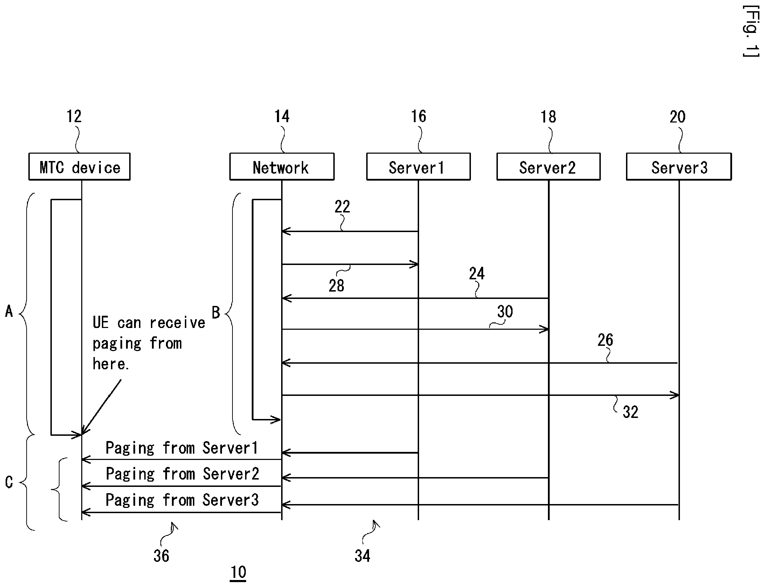

Fig. 1 is a timing diagram representing a schematic illustration of a mobile radio communications network such as, for example, for communication between a MTC device 12 and a network node device 14 operative to receive requests from MTC application servers 16, 18 and 20 and according to the current art.

While of course MTC devices can be arranged to employ only a single MTC application, and thus require access from only a single server, limitations in the current art are particularly pronounced in a MTC device 12 employing multiple applications each to be accessed by a respective application server 16, 18 20. Within Fig. 1, the MTC device 12 employs an extended DRX cycle serving to reduce power consumption and, as such, is unable to receive any network signalling from the network device 14 during the extended DRX cycle period A. Such extended DRX cycle period also been reflected B in the network node device 14.

In order to establish connection to the MTC device 12, each of the MTC application servers 16, 18, 20 must initiate paging messaging to the MTC device 12 to establish the required communication link. As illustrated, each server 16, 18, 20 in turn sends a respective access request 22, 24, 26 to the network device 14. However, with these being received during the "power down" period B of the extended DRX cycle, each is rejected at the network node device 14, and the corresponding rejection signal 28, 30, 32 returned to each server 16, 18, 20 respectively.

Retry attempts for the access requests are made by each of the servers and, at a time that the extended DRX cycle has expired, there is likely to be convergence and congestion of the access request 34, and the related paging messages 36 which will again fail to establish connection to the MTC device since the paging messages 36 cannot be handled (near) simultaneously in period C.

The invention allows for the MTC application and its associated MTC application server to have the same schedule for the paging time, and with the MTC device knowing this schedule, the MTC device can switch on the receiver for the paging only at the scheduled time. An advantageously effective low-power consumption arrangement can then be provided in which paging messages can be received in a timely manner.

As will be described later, the invention can also handle multi-scheduling such as for example with multiple MTC applications. For example, when the MTC application A, B and C in MTC device have the pre-scheduled DRX scheme respectively, the MTC device in this proposal can merge the those scheduled DRX schemes to create a single scheduled DRX scheme. Further, if the MTC device controls the monitoring of the paging signaling according to the merged DRX scheme, all paging messages can be received at the MTC device.

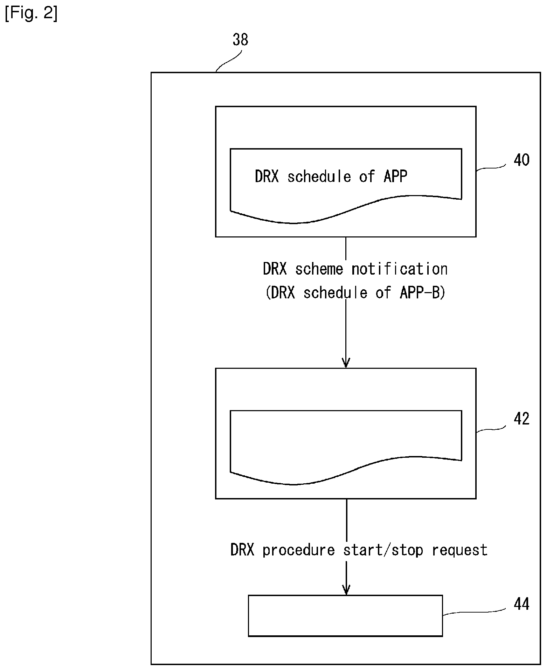

Fig. 2 is a schematic illustration of a mobile radio communications device 38 according to an embodiment of the invention and, in this example, comprising a MTD device employing a MTC application 40 having an associated DRX schedule of planned DRX activity.

The DRX schedule is delivered to a DRX scheduler 42 in which it can be stored as appropriate for onward delivery to a protocol stack 44 within the device 38 for operation of the device in accordance with the required/scheduled DRX procedure. As described further below, the DRX procedure, and its related schedule, embodying the present invention can be designed by way of appropriate start/stop requests to a standard known DRX cycle pattern. In this manner, such requests can be delivered to the protocol stack 44.

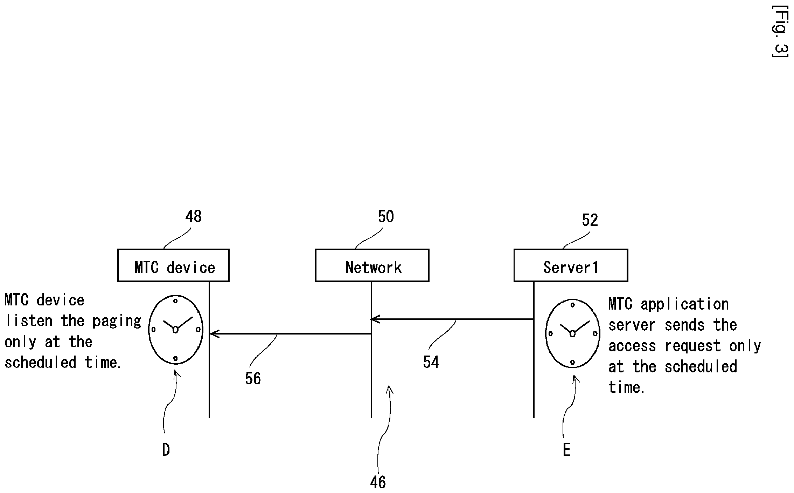

Turning now to the timing diagram of Fig. 3, there is illustrated in basic schematic form a simple MTC network arrangement for communication between a network device which in this example comprises a MTC server and a mobile radio communications device comprising a MTC device, employing a single application, and according to an initial aspect of the present invention.

The network arrangement 46 includes a MTC device 48 running an appropriate application and arranged to be accessed, by way of a network node device 50, by a MTC application server 52.

In order to benefit from the advantages of the present invention, a schedule of planned DRX activity is established for the MTC device 48 which determines that the MTC device 48 monitors/listens for an incoming paging message only at a scheduled time D. Likewise, in the MTC application server 52, the schedule of planned DRX activity is known such that an access attempt is only made at the schedule time E. In this manner, the network device 50 can receive, and respond to, an access request 54 from the server 52. In turn, a paging message 56 related to the server 52 can then be delivered to the MTC device 48. The reliable handling of the access request 54, and the paging message 56, all within the scheduled timeframe D, E can advantageously serve to enable reduced power consumption by way of an extended DRX scheme which does not suffer problematic loss of paging attempts.

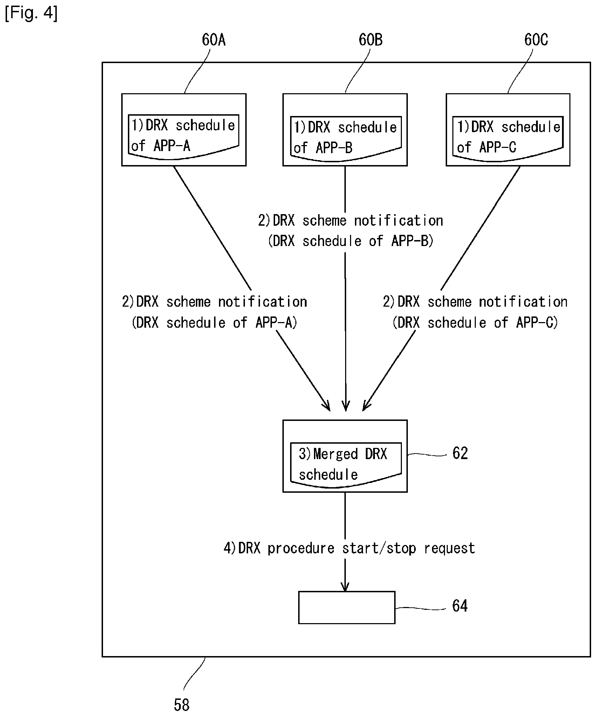

Fig. 4 is a schematic representation of another embodiment of a mobile communications device 58 exemplifying the present invention. As with Fig. 2, this example is illustrated as a MTC device 58 but this time arranged to include three separate MTC applications 60A, 60B and 60C, and each with a respective DRX schedule.

Each of the applications 60A, 60B and 60C is arranged to provide notification of its respective DRX schedule to a DRX scheduler 62 by way of a DRX scheme notifications command. The MTC application can perform the DRX scheme notification at any required time when the DRX scheme is updated. In this illustrated example, the scheduler 62 is arranged to merge three schedules into a single merged schedule for onward delivery to a protocol stack 64. The merged DRX schedule can again be defined by way of DRX procedure start/stop requests delivered by the DRX scheduler 62 to the protocol stack 64 and these serve to implement the scheduled DRX pattern/ activity.

The MTC applications 60A, 60B, 60C in the MTC device 58 have the scheduled DRX scheme respectively and it should be appreciated that the scheduled DRX scheme for the MTC applications is also known by each respective associated MTC application server.

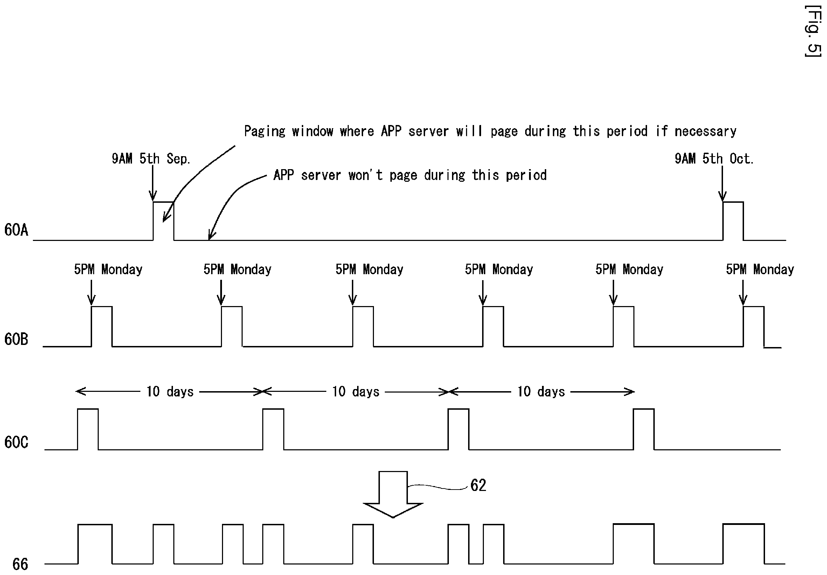

In particular, the merged DRX schedule can be advantageously employed as illustrated further with reference to the timing diagram of Fig. 5, and so to overcome problems such as those illustrated with reference to Fig.1.

Fig. 5 is a timing diagram to illustrate the merger, into a single merged DRX schedule, of the DRX schedules of each of the three MTC applications 60A, 60B, and 60C running within the MTC device 58 of Fig. 4.

As illustrated, the schedule of planned DRX activity according to MTC application 60A is a scheduled DRX cycle of one calendar month; the schedule of planned DRX activity according to MTC application 60B is a scheduled DRX cycle of one week; and the schedule of planned DRX activity according to the MTC application 60C is a scheduled DRX cycle of ten days. As noted previously with reference to Fig. 4, the DRX scheme notification of each respective DRX schedule of each of the MTC applications 60A, 60B and 60C, to the DRX scheduler 62 occurs and in the DRX scheduler 62 the three DRX schedules are combined, as indicated by arrow 62 in Fig. 5 to arrive at a single merged DRX schedule 66.

It is this merged schedule 66 that is then employed by the network and MTC application server as a means for controlling the timing of paging signals derived from access requests from the MTC application server. The merged schedule always therefore presents a window within which a paging request relevant to any one of the MTC applications in the MTC application server can be received at the MTC device.

It should be appreciated that any required pattern of DRX scheme activity can be specified as required in a flexible manner.

The format of the DRX scheme to be notified from the MTC application to the MTC scheduler is advantageously standardized so as to be supportable in a variety of MTC applications. Likewise, the DRX scheme notification command sent from the MTC application to the DRX scheduler can also be standardized. As regards the format of the DRX scheme employed within the invention, one possibility is the already standardized format such as iCalendar, vCalendar etc.

Various update methods for the DRX scheme in the MTC application can be provided. For example, the MTC application server can update the DRX scheme in the MTC application by using any one of IP packet based command, SMS, NAS/AS signalling, or OMA DM etc. Alternatively, the MTC application can employ an external interface such as COM port, Serial port, wifi etc. and the external TE can update the DRX scheme by the AT command etc. Further, the MTC application can employ a user interface on the display of the MTC device by means of which the DRX scheme can be updated by the user manipulation. Also, the MTC application itself can include a fixed DRX scheme or automatic update method for its own DRX scheme, although there is no means to update it from outside of the application.

An MTC device according to the invention can acquire the DRX related parameters from the SI messages and determine its own DRX cycle during the Attach/Routing Area Update/Tracking Area Update (Attach/ RAU/ TAU) update request procedures.

While known UEs perform the DRX procedure to periodically switch the receiver on-and-off while waiting for paging according to the determined DRX cycle, a UE such as an MTC device in this proposal can exhibit the advantageous scheduling of the DRX activity of the invention. In particular, the MTC device delays performing a normal DRX procedure until the protocol stack (44, 64) receives the DRX procedure start request from the DRX scheduler (42, 62).

When the protocol stack (44, 64) receives the DRX procedure start request, the MTC device (38, 58) of this proposal performs the normal DRX procedure but only for a limited, scheduled, period.

When the protocol stack (44, 64) receives a DRX procedure stop request during the DRX procedure, the MTC device (38, 58) stops the DRX procedure until the next DRX procedure start request is received.

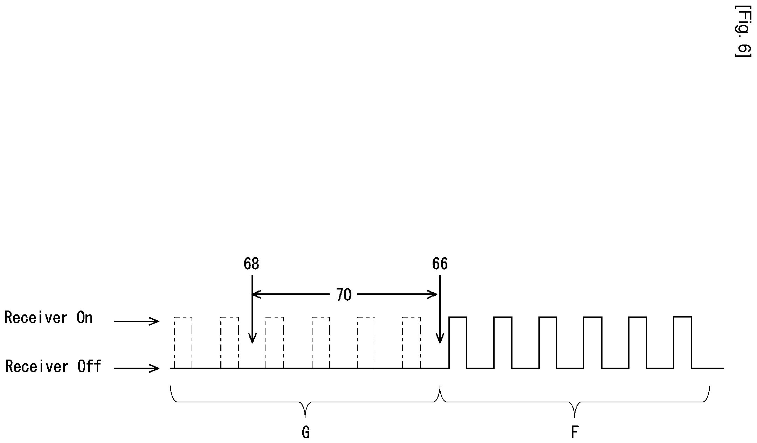

Further details of an implementation of this aspect are illustrated with reference to Fig. 6, in which DRX scheduling according to an embodiment of the present invention can be achieved on the basis of current DRX procedures.

The timing diagram illustrates a sequence of DRX periods that would arise in accordance with current DRX procedures but wherein an initial sequence of those periods (in chain dotted line) has been suppressed due to a previous DRX procedure "stop" signal delivered to the protocol stack (44, 64) of the MTC device (38, 58). When, according to a schedule of planned DRX activity, it is required to monitor for paging messages, actual scheduled timing determined by a DRX "start" signal 66 is delivered via the protocol stack. However, in a particularly advantageous implementation of the present invention, the DRX scheduler can be arranged to actually send a DRX "start" request at 68, i.e. a short time period 70 prior to actual start 66 of the DRX procedure. This time period 70 allows for a margin within which, if necessary, the protocol stack can perform initialising activities, such as System Information reading and measurement and/or RAU/TAU update request procedures. Such initialising activity advantageously negates problems that might arise if the MTC device receiver has been switched off for a relatively long period, such as calculation of the correct position of the paging message, measurement that might be required for sale reselection and completion of RAU/TAU procedures.

Such a delay margin can therefore provide a "set-up" period because, when the MTC device switches off the receiver for paging for a relatively long time, paging related SI messages have often become updated and so SI reading is necessary for calculation of the correct position of the paging. Also, the current serving cell might not fulfill the serving cell criteria and so measurement is necessary for cell reselection.

Lastly, the timer for periodic RAU/ TAU may already have expired such that a RAU/ TAU update request procedure is necessary.

If required, the protocol stack can perform such measurements/procedures if thought necessary, or alternatively it can simply wait for expiry of the margin time period before start of the paging monitoring.

From the network viewpoint, when it is required to send the paging message to the MTC device to try and establish access from the MTC server, the paging will not arrive at the MTC device if the MTC device is not monitoring for the paging at the appropriate time due to the scheduled DRX procedure in the MTC device. Therefore, in this instance the network will advantageously know the DRX scheme of each MTC device.

In this aspect of the present proposal, the MTC device can notify its own DRX scheme to the network for example by way of NAS message for example such as Attach/RAU/TAU update request signaling.

When the network which can handle the scheduled DRX scheme of each MTC device receives the DRX scheme from the MTC device, it stores the received DRX scheme for future reference when access request from the servers have been received.

When the network needs to send the paging message to the MTC device, it refers to the stored DRX scheme of the target MTC device and sends the paging at the timing when the MTC device is known to be listens for the paging according to the scheduled DRX scheme.

It should of course be appreciated that the present invention is equally applicable to any type of wireless terminals and not just MTC devices.

However, the advantages of the invention are particularly evident when employed in relation to MTC devices. In particular, the readily updateable nature of the scheduled DRX scheme is suited to a MTC application and can be configured and reconfigured by IP packet based command or SMS or NAS/AS signalling or OMA DM or via AT commands. As discussed earlier, a MTC device embodying the invention can employ a DRX scheduler which is arranged to merge each MTC application's scheduled DRX scheme to create a single scheduled DRX scheme for the MTC device. This single composite DRX scheme controls the protocol stack of this MTC device, and particularly when it should start or stop listening for the paging message according to the merged DRX scheme.

When the DRX device starts to listen for the paging according to the scheduled DRX scheme, the DRX scheduler and the protocol stack adjust the start timing of the paging listening to allow time for performance of the cell measurement, the SI(s) reading, and/or the RAU/TAU procedures if these are necessary before start of the paging listening.

The MTC device can notify the network of its own scheduled DRX scheme and the notified DRX scheme can be used by the network to avoid the so-called missed or so-called "vain" paging.

Of course, whichever type of wireless communication system the invention is employed in, it can advantageously lead to improved lower power consumption figures in the MTC device since it allows the receiver to switch off listening for paging except during the scheduled, and far less frequent, paging window. It can also provide for improved less missed paging as the access from the MTC application server to the MTC application in the MTC device is performed according to the scheduled DRX scheme.

This application is based upon and claims the benefit of priority from United Kingdom Patent Application No. 1221325.2, filed on November 27, 2012. The whole or part of the exemplary embodiments disclosed above can be described as, but not limited to, the following supplementary notes.

### [Supplementary Note 1]

A mobile radio communications device arranged to operate a DRX power saving procedure, the DRX procedure being defined by a schedule of planned DRX activity, and arranged to receive the signalling from a network device sent according to the schedule of planned DRX activity.

### [Supplementary Note 2]

A device according to Supplementary Note 1, and including means for transmitting the said schedule to the network device.

### [Supplementary Note 3]

A device according to Supplementary Note 1, and including means for receiving the said schedule from the network device.

### [Supplementary Note 4]

A device according to Supplementary Note 1,2 or 3, and including a scheduler for storing the schedule.

### [Supplementary Note 5]

A device according to Supplementary Note 4, wherein the scheduler is arranged to communicate with a protocol stack within the device.

### [Supplementary Note 6]

A device according to any one of Supplementary Notes 1 to 5 and arranged to define a plurality of schedules of planned DRX activity.

### [Supplementary Note 7]

A device according to Supplementary Note 6, and including means for merging the plurality of schedules to form a single merged schedule of planned DRX activity.

### [Supplementary Note 8]

A device according to any one of Supplementary Notes 1 to 7 wherein the schedule of planned DRX activity is defined by DRX start and stop requests for DRX cycling.

### [Supplementary Note 9]

A device according to Supplementary Note 8, and employing a delay period between a DRX start request and start of the DRX procedure. [Supplementary Note 10]

A device according to Supplementary Note 8 or 9 and arranged to deliver the DRX start and stop requests to a protocol stack within the device.

### [Supplementary Note 11]

A device according to any one of Supplementary Notes 1 to 10 and comprising an MTC device.

### [Supplementary Note 12]

A device according to Supplementary Note 11, and including a plurality of MTC applications each related to a respective schedule of planned DRX activity.

### [Supplementary Note 13]

A mobile radio communications network device arranged for signalling to a mobile radio communications device operating a DRX power saving procedure, and arranged so as to control the said signalling according to a schedule of planned DRX activity within the mobile radio communications device.

### [Supplementary Note 14]

A device according to Supplementary Note 13 and arranged to receive the schedule from the said mobile radio communications device.

### [Supplementary Note 15]

A device according to Supplementary Note 13 and arranged to transmit the schedule to the mobile radio communications device.

### [Supplementary Note 16]

A device according to Supplementary Note 13, 14 or 15 and arranged to control the said signalling according to a plurality of schedules relating to a plurality of signalling messages.

### [Supplementary Note 17]

A device according to Supplementary Note 16, wherein the plurality of schedules are provided within a single merged schedule.

### [Supplementary Note 18]

A device according to Supplementary Note 13, 14, 15, 16 or 17 and arranged to store the schedule planned DRX activity.

### [Supplementary Note 19]

A device according to Supplementary Note 13, 14, 15, 16, 17 or 18 and arranged to act on requests from a further network device for signalling to the mobile communications device, according to the said schedule of planned DRX activity.

### [Supplementary Note 20]

A device according to Supplementary Note 19 and arranged to receive access requests from at least one MTC server.

### [Supplementary Note 21]

A device according to Supplementary Note 19 and comprising a MTC

### [Supplementary Note 22]

A mobile radio communications system including a mobile radio communications device according to any one or more of Supplementary Notes 1 to 12, and a mobile radio communications network device according to any one or more of Supplementary Notes 13 to 21.

### [Supplementary Note 23]

A method of operating a mobile radio communications device within a wireless communications network according to a power saving DRX procedure, including defining a schedule of planned DRX activity for the device and receiving network signalling sent to the device according to the schedule of planned DRX activity.

### [Supplementary Note 24]

A method according to Supplementary Note 23 and including the steps of defining a plurality of schedules of DRX activity within the device. [Supplementary Note 25]

A method according to Supplementary Note 24 and including the step of merging the said plurality of schedules into a single merged schedule of planned DRX activity.

### [Supplementary Note 26]

A method according to Supplementary Note 23, 24, or 25, and including the step of transmitting the schedule from the mobile radio communications device to the network, or receiving the schedule at the mobile radio communications device from the network.

### [Supplementary Note 27]

A method according to any one of Supplementary Notes 23 to 26, and defining the DRX activity by DRX start and stop requests for DRX cycling.

### [Supplementary Note 28]

A method according to Supplementary Note 27, and including employing a delay period between a DRX start request and start of the DRX procedure.

### [Supplementary Note 29]

A method acording to any one of Supplementary Notes 23 to 28, and for operating a MTC device within a MTC network.

### [Supplementary Note 30]

A method of operating a mobile radio communications network device to provide network signalling to a mobile radio communications device operating a power saving DRX procedure, and including the step of controlling the said signalling according to a schedule of planned DRX activity in the mobile radio communications device.

### [Supplementary Note 31]

A method according to Supplementary Note 30 and including the step of receiving the said schedule of planned DRX activity from the mobile radio communications device, or transmitting the schedule to the mobile radio communications device.

### [Supplementary Note 32]

A method according to Supplementary Note 29 or 30, and including the step of storing the said schedule within the mobile radio communications network device.

### [Supplementary Note 33]

A method according to Supplementary Note 32 and including the step of acting on requests from a further network device for signalling to the mobile radio communications device, according to the said schedule of planned DRX activity.

### [Supplementary Note 34]

A method of operating a mobile radio syndication system including a method according to any one of Supplementary Notes 23 to 29, and a method according to any one of Supplementary Notes 30 to 33.

### [Reference Signs List]

- 12: MACHINE TYPE COMMUNICATION(MTC) DEVICE
- 14: NETWORK DEVICE
- 16, 18, 20: MTC APPLICATION SERVERS
- 38: MOBILE RADIO COMMUNICATIONS DEVICE
- 40: MTC APPLICATION
- 42: DRX SCHEDULER
- 44: PROTOCOL STACK
- 48: MTC DEVICE
- 50: NETWORK
- 52: MTC APPLICATION SERVER
- 58: MOBILE COMMUNICATIONS DEVICE
- 60A, 60B, 60C: MTC APPLICATIONS
- 62: DRX SCHEDULER
- 64: PROTOCOL STACK

## Claims

1. A mobile radio communications device (12) arranged to define a plurality of schedules of planned DRX activity (60A, 60B, 60C), arranged to merge the plurality of schedules to form a single merged schedule of planned DRX activity (62), arranged to operate a DRX power saving procedure, the DRX procedure being defined by the single merged schedule of planned DRX activity, arranged to transmit the single merged schedule of planned DRX activity to a network device (14), and arranged to receive signalling from the network device sent according to the single merged schedule of planned DRX activity.

2. A device as claimed in Claim 1 and including a scheduler for storing the single merged schedule of planned DRX activity (62).

3. A mobile radio communications network device (14) arranged for signalling to a mobile radio communications device (12) operating a DRX power saving procedure, wherein the mobile radio communications network device is arranged to receive a plurality of schedules of planned DRX activity (60A, 60B, 60C) within the mobile radio communications device from the mobile radio communications device, the plurality of schedules being provided within a single merged schedule of planned DRX activity (62), and arranged to control the said signalling according to the single merged schedule of planned DRX activity.

4. A device (14) as claimed in Claim 3, wherein the plurality of schedules (60A, 60B, 60C) relate to a plurality of signalling messages.

5. A mobile radio communications system including a mobile radio communications device (12) as claimed in Claims 1 or 2, and a mobile radio communications network device (14) as claimed in Claim 3 or 4.

6. A method of operating a mobile radio communications device (12) within a wireless communications network according to a power saving DRX procedure, including defining a plurality of schedules of planned DRX activity (60A, 60B, 60C) for the device, merging the plurality of schedules into a single merged schedule of planned DRX activity (62), transmitting the single merged schedule of planned DRX activity from the mobile radio communications device to the network, and receiving network signalling sent to the mobile radio communications device according to the single merged schedule of planned DRX activity.

7. A method of operating a mobile radio communications network device (14) to provide network signalling to a mobile radio communications device (12) operating a power saving DRX procedure, and including the step of receiving a plurality of schedules of planned DRX activity (60A, 60B, 60C) within the mobile radio communications device from the mobile radio communications device, the plurality of schedules being provided as a single merged schedule of planned DRX activity (62), and the step of controlling the said signalling according to the single schedule of planned DRX activity.

## Patentansprüche

1. Mobilfunkkommunikationsvorrichtung (12), die dafür eingerichtet ist, mehrere Pläne einer geplanten DRX-Aktivität (60A, 60B, 60C) zu definieren, dafür eingerichtet ist, die mehreren Pläne zu vereinigen, um einen einzigen vereinigten Plan der geplanten DRX-Aktivität (62) zu bilden, dafür eingerichtet ist, eine DRX-Stromsparprozedur auszuführen, wobei die DRX-Prozedur durch den einzigen vereinigten Plan der geplanten DRX-Aktivität definiert ist, dafür eingerichtet ist, den einzigen vereinigten Plan der geplanten DRX-Aktivität zu einer Netzvorrichtung (14) zu übertragen, und dafür eingerichtet ist, eine Signalisierung von der Netzvorrichtung zu empfangen, die entsprechend dem einzigen vereinigten Plan der geplanten DRX-Aktivität gesendet wurde.

2. Vorrichtung nach Anspruch 1, die einen Planer zum Speichern des einzigen vereinigten Plans der geplanten DRX-Aktivität (62) aufweist.

3. Mobilfunkkommunikationsnetzvorrichtung (14), die dafür eingerichtet ist, eine Signalisierung zu einer Mobilfunkkommunikationsvorrichtung (12) zu senden, welche eine DRX-Stromsparprozedur ausführt, wobei die Mobilfunkkommunikationsnetzvorrichtung dafür eingerichtet ist, mehrere Pläne der geplanten DRX-Aktivität (60A, 60B, 60C) innerhalb der Mobilfunkkommunikationsvorrichtung von der Mobilfunkkommunikationsvorrichtung zu empfangen, wobei die mehreren Pläne innerhalb eines einzigen vereinigten Plans der geplanten DRX-Aktivität (62) bereitgestellt sind, und dafür eingerichtet ist, die Signalisierung entsprechend dem einzigen vereinigten Plan der geplanten DRX-Aktivität zu steuern.

4. Vorrichtung (14) nach Anspruch 3, wobei sich die mehreren Pläne (60A, 60B, 60C) auf mehrere Signalisierungsnachrichten beziehen.

5. Mobilfunkkommunikationssystem, das eine Mobilfunkkommunikationsvorrichtung (12) nach Anspruch 1 oder 2 und eine Mobilfunkkommunikationsnetzvorrichtung (14) nach Anspruch 3 oder 4 aufweist.

6. Verfahren zum Betreiben einer Mobilfunkkommunikationsvorrichtung (12) innerhalb eines Drahtloskommunikationsnetzes entsprechend einer DRX-Stromsparprozedur, wobei mehrere Pläne der geplanten DRX-Aktivität (60A, 60B, 60C) für die Vorrichtung definiert werden, die mehreren Pläne zu einem einzigen vereinigten Plan der geplanten DRX-Aktivität (62) vereinigt werden, der einzige vereinigte Plan der geplanten DRX-Aktivität von der Mobilfunkkommunikationsvorrichtung zum Netz gesendet wird und die Netzsignalisierung empfangen wird, die entsprechend dem einzigen vereinigten Plan der geplanten DRX-Aktivität zur Mobilfunkkommunikationsvorrichtung gesendet wurde.

7. Verfahren zum Betreiben einer Mobilfunkkommunikationsnetzvorrichtung (14), um einer Mobilfunkkommunikationsvorrichtung (12), welche eine DRX-Stromsparprozedur ausführt, eine Netzsignalisierung bereitzustellen, mit dem Schritt des Empfangens mehrerer Pläne der geplanten DRX-Aktivität (60A, 60B, 60C) innerhalb der Mobilfunkkommunikationsvorrichtung von der Mobilfunkkommunikationsvorrichtung, wobei die mehreren Pläne als ein einziger vereinigter Plan der geplanten DRX-Aktivität (62) bereitgestellt werden, und dem Schritt des Steuerns der Signalisierung entsprechend dem einzigen Plan der geplanten DRX-Aktivität.

## Revendications

1. Dispositif de radiocommunication mobile (12) agencé pour définir une pluralité d'ordonnancements d'activité DRX planifiée (60A, 60B, 60C), agencé pour fusionner la pluralité d'ordonnancements pour former un ordonnancement fusionné unique d'activité DRX planifiée (62), agencé pour opérer une procédure d'économie d'énergie DRX, la procédure DRX étant définie par l'ordonnancement fusionné unique d'activité DRX planifiée, agencé pour transmettre l'ordonnancement fusionné unique d'activité DRX planifiée à un dispositif de réseau (14), et agencé pour recevoir une signalisation de la part du dispositif de réseau envoyé selon l'ordonnancement fusionné unique d'activité DRX planifiée.

2. Dispositif selon la revendication 1, et incluant un ordonnanceur pour stocker l'ordonnancement fusionné unique d'activité DRX planifiée (62).

3. Dispositif de réseau de radiocommunication mobile (14) agencé pour signaler à un dispositif de radiocommunication mobile (12) la mise en oeuvre d'une procédure d'économie d'énergie DRX, dans lequel le dispositif de réseau de radiocommunication mobile est agencé pour recevoir une pluralité d'ordonnancements d'activité DRX planifiée (60A, 60B, 60C) au sein du dispositif de radiocommunication mobile de la part du dispositif de radiocommunication mobile, la pluralité d'ordonnancements étant prévue au sein d'un ordonnancement fusionné unique d'activité DRX planifiée (62), et agencé pour commander ladite signalisation selon l'ordonnancement fusionné unique d'activité DRX planifiée.

4. Dispositif (14) selon la revendication 3, dans lequel la pluralité d'ordonnancements (60A, 60B, 60C) concerne une pluralité de messages de signalisation.

5. Système de radiocommunication mobile incluant un dispositif de radiocommunication mobile (12) tel que revendiqué dans les revendications 1 ou 2, et un dispositif de réseau de radiocommunication mobile (14) tel que revendiqué dans la revendication 3 ou 4.

6. Procédé de mise en oeuvre d'un dispositif de radiocommunication mobile (12) au sein d'un réseau de communication sans fil selon une procédure DRX d'économie d'énergie, incluant la définition d'une pluralité d'ordonnancements d'activité DRX planifiée (60A, 60B, 60C) pour le dispositif, la fusion de la pluralité d'ordonnancements en un ordonnancement fusionné unique d'activité DRX planifiée (62), la transmission de l'ordonnancement fusionné unique d'activité DRX planifiée du dispositif de radiocommunication mobile au réseau, et la réception d'une signalisation de réseau envoyée au dispositif de radiocommunication mobile selon l'ordonnancement fusionné unique d'activité DRX planifiée.

7. Procédé de mise en oeuvre d'un dispositif de réseau de radiocommunication mobile (14) pour fournir une signalisation de réseau à un dispositif de radiocommunication mobile (12) mettant en oeuvre une procédure DRX d'économie d'énergie, et incluant l'étape de réception d'une pluralité d'ordonnancements d'activité DRX planifiée (60A, 60B, 60C) au sein du dispositif de radiocommunication mobile de la part du dispositif de radiocommunication mobile, la pluralité d'ordonnancement étant fournie comme un ordonnancement fusionné unique d'activité DRX planifiée (62), et l'étape de commande de ladite signalisation selon l'ordonnancement unique d'activité DRX planifiée.
